# EUROPEAN PATENT APPLICATION

(11) **EP 4 844 332 A1**
(43) Date of publication of application: **25.11.2026**
(21) Application number: 24918657.8
(22) Date of filing: 11.11.2024
(51) Int. Cl.: G01B 11/02, G01B 9/02017

(54) **RANGING DEVICE**

(30) Priority: 17.01.2024 JP 2024005422
(71) Applicant: Panasonic Intellectual Property Management Co., Ltd., Kadoma-shi, Osaka 571-0057 (JP)
(72) Inventor: KIYOHARA Takayuki, Kadoma-Shi Osaka 571-0057 (JP); NOZAWA Katsuya, Kadoma-Shi Osaka 571-0057 (JP)
(74) Representative: Grünecker Patent- und Rechtsanwälte PartG mbB
(86) International application number: PCT/JP2024/039907
(87) International publication number: WO 2025/154370

(57) **Abstract**

A distance measuring device includes: a first light source that emits a first laser beam; a second light source that emits a second laser beam; at least one interferometer that outputs a first signal by using first interference based on a plurality of laser beams that include the first laser beam, the plurality of laser beams being different in wavelength from each other, the at least one interferometer outputting a second signal by using second interference based on the second laser beam, the at least one interferometer including a reference surface; a head wherein a distance from the head to an object is variable; and a processing circuit that calculates a first distance from the head to the object based on the first signal and calculates a second distance from the reference surface to the head based on the second signal.

## Description

### Technical Field

The present disclosure relates to a distance measuring device.

### Background Art

Optical interferometry using a laser beam is widely used as a means of acquiring, for example, information about the distance to an object and/or the shape of an object in a non-contact manner. As an example, light detection and ranging (LiDAR) using frequency modulated continuous wave (FMCW) radar is known as a three-dimensional measurement device with millimeter accuracy. Optical interferometry using optical coherence tomography (OCT) or optical comb is known as a means that can perform measurement with micrometer accuracy. These are widely used in the medical field and/or the industrial field.

It is possible to perform measurement with nanometer accuracy by controlling an optical interference phenomenon with higher accuracy. For example, measurement using a Michelson interference system using single-wavelength laser is a method of measuring a distance difference at the nanometer scale as a light intensity.

Optical measurement with nanometer accuracy, which is typified by homodyne optical interferometry, has a problem in that the length measurement range is limited to the sub-micrometer scale, which is half the wavelength, while measurement with high accuracy is possible in a non-contact manner. Therefore, there are cases where it is difficult to measure a sample having both of a structure at the nanometer scale and a structure at the tens of micrometer scale.

As a method of solving the problem, multi-wavelength interferometry, which is optical interferometry using two or more single-wavelength lasers, is regarded as promising. Multi-wavelength interferometry can resolve the existing problem of the trade-off between the length measurement range and the length measurement accuracy, and can achieve both of a long length measurement range and a high length measurement accuracy.

NPL 1 discloses a method of three-dimensionally measuring the surface shape of a sample, such as a lens, by scanning a non-contact probe that uses multi-wavelength interferometry. To be specific, three-dimensional data is generated by measuring the distance from a reference frame to the non-contact probe and the distance from the non-contact probe to the sample. In this case, in order to perform three-dimensional measurement with high accuracy at the nanometer scale, it is required to measure the distance from the reference frame to the non-contact probe also with high accuracy at the nanometer scale.

### Citation List

### Non-Patent Literature

NPL 1: J. Petter et al., "Non-contact profiling for high precision fast asphere topology measurement", Proc. SPIE 8788, Optical Measurement Systems for Industrial Inspection VIII, 878819 (13 May 2013)

### Summary of Invention

### Technical Problem

The technology disclosed in NPL 1 has room for improvement in distance measurement accuracy.

The present disclosure provides a distance measuring device that can measure distance with high accuracy.

### Solution to Problem

A distance measuring device according to an aspect of the present disclosure includes: a first light source that emits a first laser beam; a second light source that emits a second laser beam; at least one interferometer that outputs a first signal by using first interference based on a plurality of laser beams that include the first laser beam, the plurality of laser beams being different in wavelength from each other, the at least one interferometer outputting a second signal by using second interference based on the second laser beam, the at least one interferometer including a reference surface; a head wherein a distance from the head to an object is variable; and a processing circuit that calculates a first distance from the head to the object based on the first signal and calculates a second distance from the reference surface to the head based on the second signal. Advantageous Effects of Invention

With the present disclosure, it is possible to measure distance with high accuracy.

### Brief Description of Drawings

[Fig. 1] Fig. 1 schematically illustrates a distance measuring device according to a first embodiment.
[Fig. 2A] Fig. 2A is a view for illustrating the principle of distance measurement using single-wavelength interferometry.
[Fig. 2B] Fig. 2B is a view for illustrating the principle of distance measurement using multi-wavelength interferometry.
[Fig. 3] Fig. 3 is a block diagram illustrating the configuration of the distance measuring device according to the first embodiment.
[Fig. 4] Fig. 4 illustrates the specific configuration of an interferometer included in the distance measuring device according to the first embodiment.
[Fig. 5] Fig. 5 is a flowchart illustrating the operation of the distance measuring device according to the first embodiment.
[Fig. 6] Fig. 6 is a block diagram illustrating the configuration of a distance measuring device according to a second embodiment.
[Fig. 7] Fig. 7 schematically illustrates a distance measuring device according to a first modification of the embodiment.
[Fig. 8] Fig. 8 schematically illustrates a distance measuring device according to a second modification of the embodiment.
[Fig. 9] Fig. 9 schematically illustrates a distance measuring device according to a third modification of the embodiment.

### Description of Embodiments

### (Outline of Present Disclosure)

First, definitions of main terms used in the present specification are as follows.

The term "length measurement accuracy" refers to the degree of accuracy of distance measurement. That is, length measurement accuracy is a measure of how accurately distance information is obtained. Therefore, higher length measurement accuracy indicates that more correct distance measurement is performed.

The term "length measurement range" refers to the range in a distance direction in which unique distance information can be obtained. That is, a length measurement range represents a range in which measurement of distance (that is, distance measurement) is possible.

In the present specification, each of length measurement accuracy and length measurement range is represented in the same dimension as distance. To be specific, the unit of each of length measurement accuracy and length measurement range is nanometer (nm), micrometer (µm), millimeter (mm), or the like. Therefore, "length measurement accuracy is high" is the same as that of "length measurement accuracy is short" represented in the distance dimension. The meaning of "length measurement accuracy is low" is the same as that of "length measurement accuracy is long" represented in the distance dimension. In the present specification, length measurement accuracy may be described simply as "accuracy". Length measurement range may be simply described as "range".

Distance measurement within a length measurement range is called "absolute distance measurement". For example, distance measurement with an accuracy of 10 nm in a length measurement range of 1 mm is absolute distance measurement that can detect a difference of 10 nm in the range of 1 mm.

Distance measuring devices according to a plurality of aspects of the present disclosure are as follows.

A distance measuring device according to a first aspect of the present disclosure includes: a first light source that emits a first laser beam; a second light source that emits a second laser beam; at least one interferometer that outputs a first signal by using first interference based on a plurality of laser beams that include the first laser beam, the plurality of laser beams being different in wavelength from each other, the at least one interferometer outputting a second signal by using second interference based on the second laser beam, the at least one interferometer including a reference surface; a head wherein a distance from the head to an object is variable; and a processing circuit that calculates a first distance from the head to the object based on the first signal and calculates a second distance from the reference surface to the head based on the second signal.

When distance measurement is to be performed by using interference of a laser beam, it is desirable that the frequency of the laser beam be stable. However, the wavelength selectivity of a light source that emits a laser beam with stable frequency is low. If the wavelength selectivity is low, it may not be possible to perform measurement depending on the material of the object, and the versatility of a distance measuring device is low. Moreover, the cost of a laser source that emits a laser beam with stable frequency is high. Therefore, it is difficult to use a light source that emits a laser beam with stable frequency for every light source. The difficulty increases as the number of positions where interference based on a plurality of laser beams is to be used, that is, the number of distances to be measured, increases, because the number of light sources increases. Therefore, it is required not only to use interference based on a plurality of laser beams but also to effectively use interference based on one laser beam.

For example, when the distance measuring device according to the present aspect measures the surface shape of the object, the distance from the head to the object (that is, the first distance) changes in accordance of the surface shape of the object. Change in the first distance may be continuous change or may be discontinuous change. On the other hand, change in the distance from the reference surface to the head (that is, the second distance) is usually continuous, and is rarely discontinuous.

A signal obtained by using interference based on a plurality of laser beams whose wavelengths differ from each other (that is, the first signal) is suitable to measure distance that changes discontinuously. On the other hand, a signal obtained by using interference based on one laser beam (that is, the second signal) is not suitable to measure distance that changes discontinuously.

Accordingly, as described above, the distance measuring device according to the present aspect uses the first signal to measure the first distance that is likely to change discontinuously and uses the second signal to measure the second distance that is not likely to change discontinuously. Thus, the distance measuring device according to the present aspect can perform distance measurement with high accuracy.

A distance measuring device according to a second aspect of the present disclosure is the distance measuring device according to the first aspect, in which a frequency of the second laser beam may be more stable than a frequency of the first laser beam.

Thus, it is possible to increase the accuracy of measurement of the second distance using the second laser beam. Moreover, it is possible to use, as the first light source, a laser light source that emits a laser beam with low frequency stability, such as a laser light source with wide wavelength selectivity. Because the first laser beam emitted by the first light source is a light beam with which the object is irradiated, as the wavelength selectivity of the first laser beam increases, a wider variety of items can be used as the object. Thus, it is possible to realize a highly versatile distance measuring device.

A distance measuring device according to a third aspect of the present disclosure is the distance measuring device according to the first or second aspect, in which the second light source may be fixed to a member different from the head.

Thus, it is possible to reduce the size and weight of the head. For example, when the head is movable, it is possible to reduce positional displacement, vibration, and the like of an optical system in the head due to movement of the head, and it is possible to increase the accuracy of measurement.

A distance measuring device according to a fourth aspect of the present disclosure is the distance measuring device according to any one of the first to third aspects, in which the second light source may be a He-Ne laser light source or a frequency-locked laser light source having a gas cell.

Thus, it is possible to increase the stability of the frequency of the second laser beam emitted by the second light source. For example, the He-Ne laser light source or the frequency-locked laser light source having a gas cell can emit a laser beam with low frequency variation for a long light emission period. Therefore, it is possible to realize a distance measuring device that can perform measurement for a long period.

A distance measuring device according to a fifth aspect of the present disclosure is a distance measuring device according to any one of the first to fourth aspects, in which the first light source may be a distributed-feedback (DFB) laser light source.

Thus, it is possible to increase the accuracy of measurement of the first distance, which uses the first laser beam from the first light source. Moreover, because the DFB laser light source has a higher wavelength selectivity than a gas laser light source, the wavelength selectivity of the first laser beam increases. Therefore, a wider variety of items can be used as the object, and thus it is possible to realize a highly versatile distance measuring device.

A distance measuring device according to a sixth aspect of the present disclosure is the distance measuring device according to any one of the first to fifth aspects, which may further include an optical fiber that guides the first laser beam or the second laser beam to the at least one interferometer.

Thus, because it is possible to reduce loss of laser beam by using the optical fiber, it is possible to increase the energy efficiency of the distance measuring device. Moreover, because it is possible to use a high-intensity laser beam for measurement, influence of noise is reduced, and it is possible to increase the accuracy of measurement.

A distance measuring device according to a seventh aspect of the present disclosure is the distance measuring device according to any one of the first to sixth aspects, in which the at least one interferometer may be configured to use homodyne interference.

Thus, compared with a case where heterodyne interference is used, it is possible to increase wavelength selectivity. For example, because the wavelength selectivity of the first laser beam is increased, a wider variety of items can be used as the object. Thus, it is possible to realize a highly versatile distance measuring device.

A distance measuring device according to an eighth aspect of the present disclosure is the distance measuring device according to any one of the first to seventh aspects, in which the first signal may be generated by multi-wavelength interference between the plurality of laser beams.

Thus, when measurement of the first distance is performed, it is possible to achieve both of a long length measurement range and a high length measurement accuracy.

A distance measuring device according to a ninth aspect of the present disclosure is the distance measuring device according to any one of the first to eighth aspects, in which the at least one interferometer may include a first interference system for causing the first interference, and a second interference system for causing the second interference, the first interference system may be fixed to the head, and the second interference system may be fixed to a member different from the head.

Thus, for example, when the head is movable, because the second interference system is not influenced by movement of the head, it is possible to increase the accuracy of measurement of the second distance.

A distance measuring device according to a tenth aspect of the present disclosure is the distance measuring device according to any one of the first to ninth aspects, in which the processing circuit may calculate a distance from the reference surface to the object based on the first distance and the second distance.

Thus, because it is possible to obtain the absolute position of the object with respect to the reference surface, it is possible to measure the surface shape of the object with high accuracy.

A distance measuring device according to an eleventh aspect of the present disclosure is the distance measuring device according to any one of the first to tenth aspects, in which a timing of outputting the first signal and a timing of outputting the second signal may be synchronized.

Thus, because the timing of measuring the first distance and the timing of measuring the second distance are synchronized, it is possible to measure the distance from the reference surface to the object with high accuracy.

A distance measuring device according to a twelfth aspect of the present disclosure is the distance measuring device according to any one of the first to eleventh aspects, in which the head may include a reflector, and the processing circuit may calculate a distance from the reference surface to the reflector as the second distance based on the second signal.

Thus, it is possible to allow the second laser beam to be efficiently reflected by the reflector. Because it is possible to use reflected light with high intensity for measurement, influence of noise is reduced, and it is possible to increase the accuracy of measurement.

A distance measuring device according to a thirteenth aspect of the present disclosure is the distance measuring device according to any one of the first to twelfth aspects, in which a wavelength of the second laser beam may be shorter than a wavelength of the first laser beam.

Thus, because the length measurement accuracy increases as the wavelength of a laser beam becomes shorter, it is possible to increase the accuracy of measurement of the second distance.

A distance measuring device according to a fourteenth aspect of the present disclosure is the distance measuring device according to any one of the first to thirteenth aspects, in which the at least one interferometer may include a first interference system for causing the first interference, and a second interference system for causing the second interference, and the distance measuring device may further comprise a first optical fiber that guides the first laser beam to the first interference system, and a second optical fiber that guides the second laser beam to the second interference system.

Thus, it is possible to transmit the first laser beam from the first light source to the first interference system through the first optical fiber with a small loss. Likewise, it is possible to transmit the second laser beam from the second light source to the second interference system through the second optical fiber with a small loss. Therefore, it is possible to increase the energy efficiency of the distance measuring device. Moreover, because it is possible to use the first laser beam and the second laser beam, each of which have high intensity, for measurement, influence of noise is reduced, and it is possible to increase the accuracy of measurement.

A distance measuring device according to a fifteenth aspect of the present disclosure is the distance measuring device according to any one of the first to fourteenth aspects, in which the at least one interferometer may output at least one third signal by using third interference based on at least one of a plurality of split laser beams that are generated by splitting the second laser beam, and the processing circuit may measure a two-dimensional position or a three-dimensional position of the head based on the second signal and the at least one third signal.

Thus, it is possible to measure the surface shape of the object.

A distance measuring device according to a sixteenth aspect of the present disclosure is the distance measuring device according to any one of the first to fifteenth aspects, which may further include a third light source that emits a third laser beam having a wavelength different from a wavelength of the first laser beam. In the distance measuring device according to the sixteenth aspect, the plurality of laser beams may further include the third laser beam, and the at least one interferometer may output the first signal by using the first interference based on the first laser beam and the third laser beam.

Thus, the first laser beam and the third laser beam are used for first interference for outputting the first signal, and the second laser beam is used for second interference for outputting the second signal. That is, because each of the first laser beam, the second laser beam, and the third laser beam is used for only one of the first interference and the second interference, it is possible to optimize the wavelength and the like of each of these laser beams in accordance with measurement conditions. Therefore, it is possible to increase the accuracy of each of the first signal and the second signal, and it is possible to increase the accuracy of measurement.

A distance measuring device according to a seventeenth aspect of the present disclosure is the distance measuring device according to any one of the first to fifteenth aspects, in which the plurality of laser beams may further include the second laser beam, and the at least one interferometer may output the first signal by using the first interference based on the first laser beam and the second laser beam.

Thus, it is possible to use the second laser beam for both of two types of interference, which are interference for outputting the first signal and interference for outputting the second signal. Therefore, it is possible to reduce the number of light sources included in the distance measuring device, and it is possible to realize reduction in the size and weight of the distance measuring device.

A distance measuring device according to an eighteenth aspect of the present disclosure is the distance measuring device according to any one of the first to seventeenth aspects, in which the head may be movable.

Thus, it is possible to measure the distance to the object and the surface shape of the object by moving the movable head and without moving the object. Because the positional displacement, vibration, and the like of the optical system due to movement of the object does not occur, it is possible to increase the accuracy of measurement.

A distance measuring device according to a nineteenth aspect of the present disclosure is the distance measuring device according to any one of the first to eighteenth aspects, which may further include a movable stage for supporting the object.

Thus, by moving the object together with the movable stage, it is possible to realize a head in which a distance from the head to the object is variable and to perform distance measurement and measurement of surface shape. Because it is possible to keep the head fixed, the positional displacement, vibration, and the like of the optical system due to movement of the head do not occur, and it is possible to increase the accuracy of measurement.

Hereafter, embodiments will be specifically described with reference to the drawings.

The embodiments described below each represent a general or specific example. The values, shapes, materials, elements, arrangements of elements, positions and connection configurations of elements, steps, the order of steps, and the like described in the following embodiments are examples, and do not limit the present disclosure. Among the elements in the embodiments, elements that are not described in the independent claim are optional elements.

Each figure is schematic and is not necessarily drawn strictly. Accordingly, for example, the scales and the like do not necessarily coincide with each other between the figures. In the figures, substantially the same configurations are denoted by the same numerals, and redundant descriptions thereof will be omitted or simplified.

In the present specification, terms that represent relationships between elements, such as parallel or perpendicular, terms that represent the shapes of elements, and numerical ranges not only have strict meanings but also have meanings of substantially an equivalent range including, for example, a difference of about several percents.

In the present specification, unless otherwise noted, ordinal numbers, such as "first" and "second", do not imply the number of elements or the order of elements, but are used in order to avoid confusion between similar elements and to discriminate between the elements.

### (First Embodiment)

### [1. Outline]

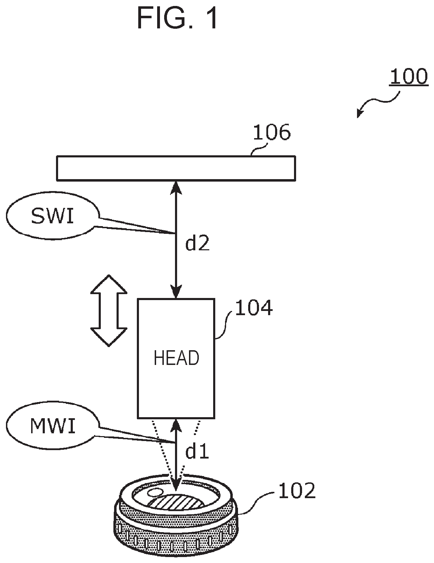

First, referring to Fig. 1, an outline of a distance measuring device according to a first embodiment will be described. Fig. 1 schematically illustrates a distance measuring device 100 according to the present embodiment.

The distance measuring device 100 illustrated in Fig. 1 measures the distance from the distance measuring device 100 to an object 102 in a non-contact manner. The object 102 is, for example, an industrial product such as a lens or a die. The distance measuring device 100 can measure the surface shape of the object 102 by using distance measurement. The distance measuring device 100 can be used as, for example, an inspection device for inspecting whether the object 102 meets the product requirements.

The distance measuring device 100 includes a head 104 whose distance to the object 102 is variable. The head 104 is also called a probe. In the present embodiment, the head 104 is movable. To be specific, as indicated by a hollow arrow in Fig. 1, the head 104 is movable in a distance measurement direction. The distance measurement direction is a direction parallel to a line segment representing a distance d1 in Fig. 1. The distance measuring device 100 measures the distance d1 from the head 104 to the object 102 and the distance d2 from a reference surface 106 to the head 104.

The distance measuring device 100 performs distance measurement in a non-contact manner optically by using laser beams. To be specific, the distance measuring device 100 measures the distance d1 by irradiating a predetermined position on a surface of the object 102 with a first laser beam and detecting reflected light from the predetermined position. Moreover, the distance measuring device 100 measures the distance d2 by irradiating the head 104 with a second laser beam and detecting reflected light from the head 104. It is possible to three-dimensionally measure the surface shape of the object 102 by scanning the position on the surface of the object 102 irradiated with the laser beam.

To measure the distance d1, the distance measuring device 100 uses interference between a plurality of laser beams including the first laser beam. To be specific, the distance measuring device 100 measures the distance d1 by using multi-wavelength interferometry (MWI).

To measure the distance d2, the distance measuring device 100 uses interference of the second laser beam. To be specific, the distance measuring device 100 measures the distance d2 by using single-wavelength interferometry (SWI).

In this way, the distance measuring device 100 uses a combination of SWI and MWI for distance measurement. Thus, it is possible to increase the accuracy of distance measurement. Specific reasons for this will be described below.

### [2. SWI and MWI]

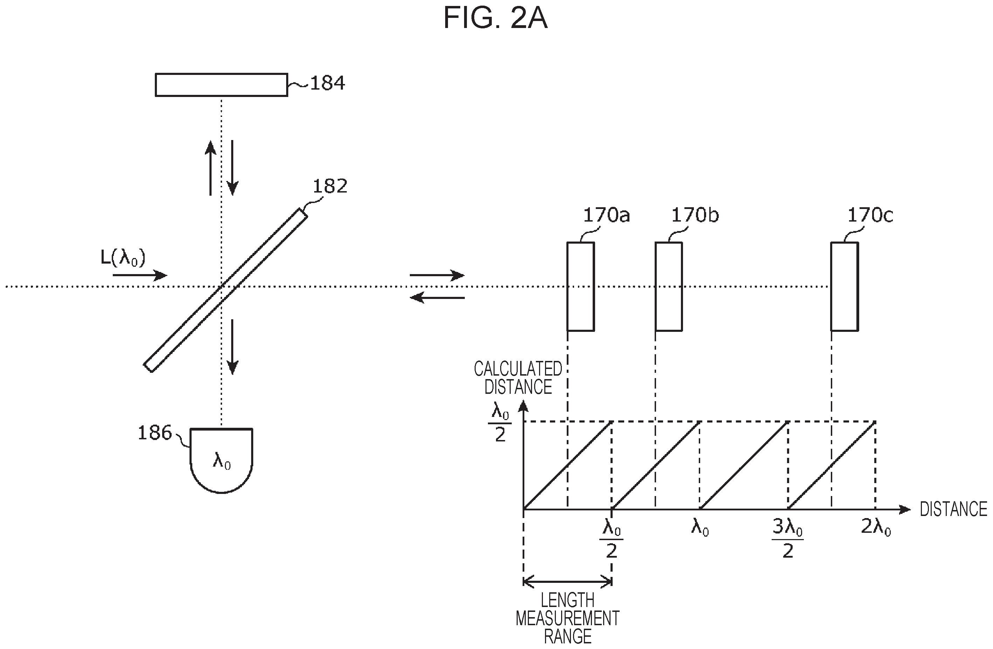

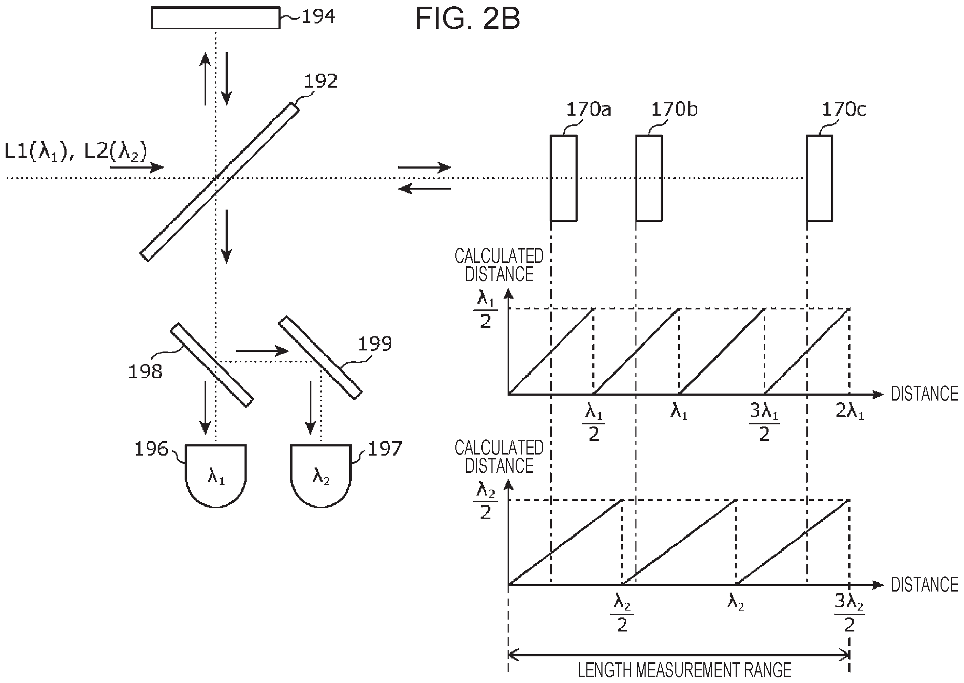

First, referring to Figs. 2A and 2B, the principle of specific measurement using each of SWI and MWI and their features will be described.

Fig. 2A is a view for illustrating the principle of distance measurement using single-wavelength interferometry (SWI). Hereafter, an example in which a Michelson interferometer is used will be described.

A light beam L emitted from a light source (not shown) is split (to be specific, split with an intensity ratio) into two light beams by a beam splitter 182. One of the two light beams is reflected by a mirror 184, then reenters the beam splitter 182, and a part of the light beam passes through the beam splitter 182 and travels toward a photodetector 186 as reference light. The other of the two light beams is reflected by an object 170a, then reenters the beam splitter 182, and a part of the light beam is reflected by the beam splitter 182 and travels toward the photodetector 186 as measurement light. The photodetector 186 detects light generated by interference between the reference light and the measurement light and outputs a signal corresponding to the intensity of the light. The photodetector 186 includes a photoelectric conversion element such as a photodiode.

In the case of SWI, a single-wavelength laser beam is used as the light beam L. When the wavelength of the single-wavelength laser beam is λ₀, the wavelength of each of the reference light and the measurement light is λ₀. The photodetector 186 detects interference light that is generated by using homodyne interference between the reference light and the measurement light having the same wavelength λ₀.

The intensity P_{PD} of a signal output from the photodetector 186 is represented by the following expression (1).

[Math. 1] ${P}_{PD} ∝ 1 - cos \left(\frac{4 {πL}_{-}}{{λ}_{k}}\right)$ (1)

In expression (1), L₋= Lₓ - L_{y}. Lₓ is the distance from the beam splitter 182 to the reflection surface of the mirror 184. L_{y} is the distance from the beam splitter 182 to the object 170a. λₖ is the wavelength of the single-wavelength laser beam. Here, k = 0. λₖ is a wavelength that is set for the light source. As a result, each of Lₓ and λₖ has a value that is known to a processing circuit that performs distance calculation. Therefore, the processing circuit can calculate the distance L_{y} from the beam splitter 182 to the object 170a based on the signal intensity P_{PD}.

Measurement using SWI has a feature that the length measurement accuracy is high and the length measurement range is short.

In Fig. 2A, objects 170b and 170c each represent the object 170a located at a different position. Fig. 2A includes a graph in which the horizontal axis represents the absolute distance with respect to a reference point at a predetermined position and the vertical axis represents the calculated distance. As illustrated in Fig. 2A, it is possible to calculate the distance from the beam splitter 182 to the object 170a in a predetermined length measurement range. As can be seen from expression (1), the length measurement range is a half wavelength (λ₀/2), where λ₀ is the wavelength of the single-wavelength laser beam.

With SWI, it is not possible to calculate a distance outside the length measurement range. For example, in the example illustrated in Fig. 2A, the distance from the beam splitter 182 to the object 170a, the distance from the beam splitter 182 to the object 170b, and the distance from the beam splitter 182 to the object 170c are all calculated as the same distance.

The wavelength λ₀ of the single-wavelength laser beam is, for example, a wavelength in the near-infrared light band or the visible light band. The near-infrared light band is a wavelength band of greater than or equal to about 700 nm and less than or equal to about 2500 nm. The visible light band is a wavelength band of greater than or equal to about 380 nm and less than or equal to about 780 nm. In this case, the length measurement range in SWI is greater than or equal to about 190 nm and less than or equal to about 1250 nm. That is, the length measurement range in SWI is in the order of several hundred nanometers to several micrometers. In this way, the length measurement range of SWI is relatively narrow compared with that of MWI described below.

Fig. 2B is a view for illustrating the principle of distance measurement using multi-wavelength interferometry (MWI). As in the case of Fig. 2A, hereafter, an example in which a Michelson interferometer is used will be described.

In the case of MWI, a plurality of laser beams whose wavelengths differ from each other are emitted from a light source. Each of the plurality of laser beams is a single-wavelength laser beam. Here, it is assumed that a single-wavelength laser beam L1 having a wavelength λ₁ and a single-wavelength laser beam L2 having a wavelength λ₂ are emitted.

Each of the single-wavelength laser beams L1 and L2 emitted from light sources (not shown) is split (to be specific, split with an intensity ratio) into two light beams by a beam splitter 192. One of the two light beams is reflected by a mirror 194, then reenters the beam splitter 192, and a part of the light beam passes through the beam splitter 192 and travels toward a photodetector 196 or 197 as reference light. The reference light includes wavelength components having the wavelengths λ₁ and λ₂. A wavelength separating element 198, such as a dichroic mirror, separates the reference light into a light component having the wavelength λ₁ and a light component having the wavelength λ₂. The light component, having the wavelength λ₁, of the reference light travels toward the photodetector 196, and the light component, having the wavelength λ₂, of the reference light is reflected by a mirror 199 and then travels toward the photodetector 197. The mirror 199 may be omitted.

The other of the two light beams split by the beam splitter 192 is reflected by the object 170a, then reenters the beam splitter 192, and a part of the light beam is reflected by the beam splitter 192 and travels toward the photodetector 196 or 197 as measurement light. As with the reference light, the measurement light includes wavelength components having the wavelengths λ₁ and λ₂. The wavelength separating element 198 separates the measurement light into a light component having the wavelength λ₁ and a light component having the wavelength λ₂. The light component, having the wavelength λ₁, of the measurement light travels toward the photodetector 196, and the light component, having the wavelength λ₂, of the measurement light is reflected by the mirror 199 and then travels toward the photodetector 197.

The photodetector 196 detects interference light generated by interference between the light component, having the wavelength λ₁, of the reference light and the light component, having the wavelength λ₁, of the measurement light, and outputs a signal corresponding to the intensity of the interference light. The photodetector 197 detects interference light generated by interference between the light component, having the wavelength λ₂, of the reference light and the light component, having the wavelength λ₂, of the measurement light, and outputs a signal corresponding to the intensity of the interference light. The photodetectors 196 and 197 each include a photoelectric conversion element such as a photodiode.

As long as light components having different wavelengths can be received, a configuration for detecting light is not limited to the one described above. For example, light that travels from the beam splitter 192 toward the photodetector 196 or 197 may be split into two light beams with an intensity ratio, and then the two split light beams may be passed through filters having pass bands for specific wavelength components (to be specific, λ₁ and λ₂). As the filter, for example, a band-pass filter is used. However, the filter may be a low-pass filter, a high-pass filter, or the like.

In MWI, heterodyne interference may be used. In this case, the wavelength separating element 198 may be omitted, and there may be only one photodetector.

Fig. 2B includes two graphs in each of which the horizontal axis represents the absolute distance with respect to a reference point at a predetermined position and the vertical axis represents the calculated distance. The upper one of the two graphs represents the distance calculated based on a signal obtained from the photodetector 196. The lower one of the two graphs represents the distance calculated based on a signal obtained from the photodetector 197.

If each of the two graphs is used alone, because the length measurement range is λ₁/2 or λ₂/2, the order of length measurement range is not substantially different from that of SWI. With MWI, it is possible to increase the length measurement range by combining the two graphs.

To be specific, the distances to the objects 170a, 170b, and 170c that are calculated in correspondence with the upper graph are substantially the same as each other. However, the distances to the objects 170a, 170b, and 170c that are calculated in correspondence with the lower graph are different from each other. Therefore, by combining the two calculation results, it is possible to calculate the distance with a length measurement range that is longer than each of λ₁/2 and λ₂/2.

The length measurement range in MWI is a half of the beat wavelength of the two single-wavelength laser beams L1 and L2. For example, when the wavelengths of the two single-wavelength laser beams are λ₁ and λ₂, the beat wavelength Λ₁₂ is represented by the following expression (2).

[Math. 2] ${Λ}_{12} = \frac{{λ}_{1} {λ}_{2}}{\left|{λ}_{1}-{λ}_{2}\right|}$ (2)

It is possible to perform distance measurement in a length measurement range corresponding to a half of the beat wavelength Λ₁₂ of beat light obtained by interference. For example, when λ₁ and λ₂ are respectively 1550 nm and 1551 nm, the beat wavelength Λ₁₂ is 2.4 mm and the length measurement range is 1.2 mm. While the length measurement range in the case of single-wavelength interferometry is about 775 nm, which is in the order of nanometers, the length measurement range of MWI is extended to the order of millimeters.

In this way, MWI is advantageous in measuring discontinuous change in distance, because the measurement range of MWI is long compared with that of SWI. The term "change in distance" means a change in the distance to each of two successive measurement positions when the measurement position is scanned. For example, change in distance occurs when the surface shape of an object is a curved surface or when the surface shape has protrusions/recesses or a step. Change in distance by a predetermined value or greater can be regarded as discontinuous change, and change in distance by less than a predetermined value can be regarded as continuous change. The predetermined value is, for example, a half wavelength of a single-wavelength laser beam emitted by a laser light source that is used.

If discontinuous change occurs in distance measurement due to a step on the surface of an object, with SWI, it may not be possible to perform accurate distance measurement because the length measurement range is exceeded. In contrast, with MWI, it is possible to perform accurate distance measurement because the length measurement range is not usually exceeded. For example, if an object is a lens having a stepped structure, the size of an optical step or a foreign substance such as dust is at most about 1 mm. Therefore, when the length measurement range of MWI is about several millimeters, it is possible to perform distance measurement with high accuracy.

From the above, SWI and MWI have the following features when compared.
- Regarding length measurement range, MWI is better than SWI.
- Regarding length measurement accuracy, SWI is better than MWI.
- Regarding accuracy of measuring discontinuous change in distance, MWI is better than SWI.
- Regarding accuracy of measuring continuous change in distance, SWI is better than MWI.

When the distance measuring device 100 illustrated in Fig. 1 performs measurement of the object 102, discontinuous change may occur in the distance d1 depending on the surface shape of the object 102. Therefore, the distance d1 can be measured with high accuracy by using MWI. In contrast, regarding the movable head 104, discontinuous change is not likely to occur. Therefore, the distance d2 can be measured with high accuracy by using SWI.

In order to increase the accuracy of measurement of each of the distance d1 and the distance d2, it is conceivable to use a laser light source with high frequency stability as a light source. Frequency stability is represented by the amount of fluctuation in the frequency of a laser beam with time. Frequency stability can be represented, for example, as σ, where σ is a standard deviation that is statistically calculated with respect to the average value (or the median) of the frequency of a laser beam. In this case, high frequency stability is synonymous with a small value of σ. However, frequency stability may be represented, not only in frequency unit, but also in wavelength unit, or may be represented in another unit having correlation with frequency.

When frequency stability is high, variation of the wavelength λₖ in expression (1) is small. Therefore, the difference between the wavelength λₖ used for calculation and the wavelength of light that is actually used for measurement is small, and thus it is possible to increase the accuracy of measurement.

As a laser with high frequency stability, a He-Ne laser light source, a frequency-locked laser light source having a gas cell, or the like can be used. However, a laser light source with high frequency stability has low wavelength selectivity. When wavelength selectivity is low, it may not be possible to perform measurement depending on the material of the object 102, and the versatility of the distance measuring device is low. For example, in the case of a He-Ne laser light source, the wavelength of a laser beam emitted from the light source is 632.8 nm.

A lens surface usually has an anti-reflection (AR) coating for reducing reflection of visible light. In this case, when light in the visible light band, such as He-Ne laser light, is used for measurement, the intensity of reflected light from the lens is reduced, and thus the S/N ratio in a detector is reduced. That is, a light source whose wavelength selectivity is low, such as He-Ne laser light, is not suitable to measure the distance d1 from the head 104 to the object 102.

In contrast, regarding the reference surface 106 and the head 104, it is possible to use a material that can efficiently reflect a wavelength component of light used for measurement. Therefore, to measure the distance d2 from the reference surface 106 to the head 104, it is possible to use a light source with low wavelength selectivity, such as a He-Ne laser light source or a frequency-locked laser light source having a gas cell, each of which is a laser light source with high frequency stability.

As heretofore described, the distance measuring device 100 according to the present embodiment uses MWI to measure the distance d1, which is likely to change discontinuously, and uses SWI to measure the distance d2, which is not likely to change discontinuously. Thus, the distance measuring device 100 can perform distance measurement with high accuracy.

Change in the distance d2 due to movement of the head 104 is usually continuous change. The amount of this change may be about 1 m at the maximum. That is, a length measurement range of 1 m may be required for SWI. Moreover, in order to increase the accuracy of measurement of the object 102, length measurement accuracy in the order of nanometers is required for SWI, as with MWI.

In this case, regarding the frequency stability of a light source used for SWI, the order of 10⁻⁶ nm is required when represented in wavelength unit. For example, stability such that wavelength variation in 24 hours is less than or equal to 3 fm or stability such that the wavelength variation in 8 hours is less than or equal to 1 fm is required.

Decrease of length measurement accuracy due to fluctuation of the wavelength of a laser beam increases as the optical path length difference of an interference system increases. Therefore, as the length measurement range increases, a laser having a higher wavelength stability is required. Examples of a light source that has such stability and can be used for SWI include a He-Ne laser light source and a frequency-locked laser light source.

On the other hand, a length measurement range required for MWI is about several millimeters. In this case, regarding the frequency stability of a light source used for MWI, the order of 10⁻³ nm is required when represented in wavelength unit. For example, stability such that wavelength variation in 24 hours is less than or equal to 2 pm or stability such that the wavelength variation in 8 hours is less than or equal to 0.6 pm is required. These values are examples, and these are not limitations. Examples of a light source that has such stability and can be used for MWI include a DFB laser light source.

### [3. Specific Configuration]

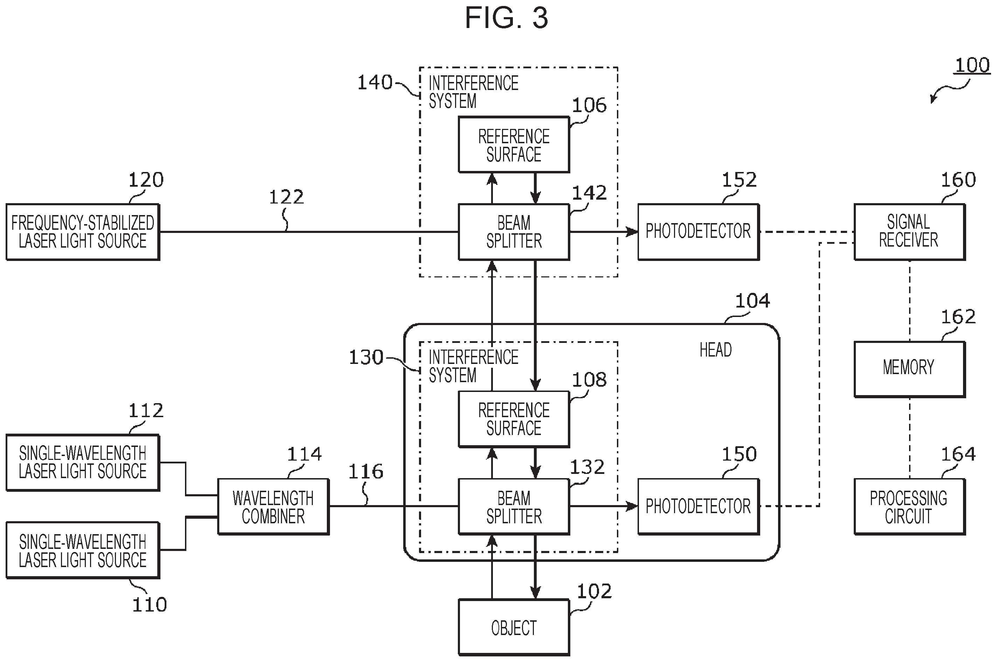

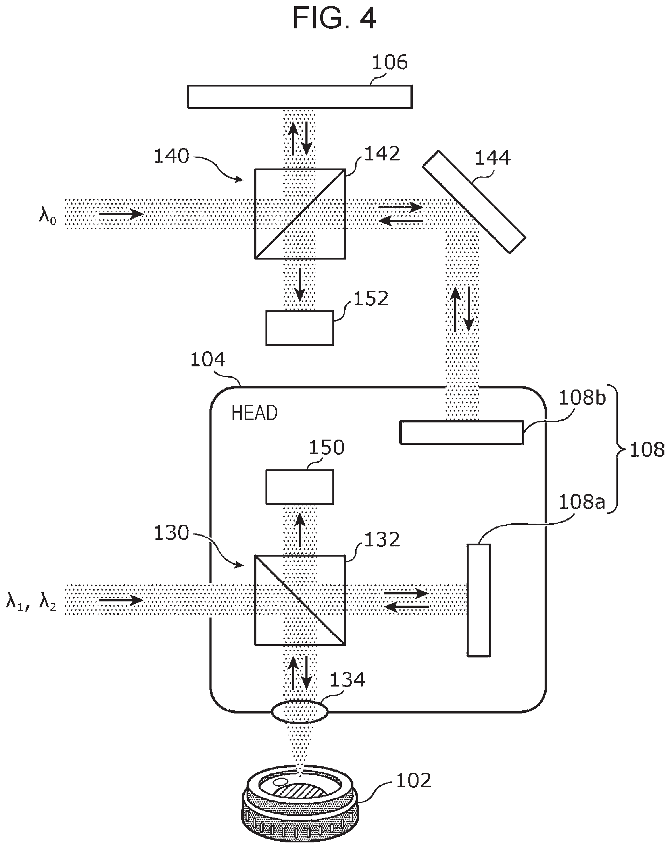

Next, referring to Figs. 3 and 4, the specific configuration of the distance measuring device 100 will be described. Fig. 3 is a block diagram illustrating the configuration of the distance measuring device 100 according to the present embodiment. Fig. 4 illustrates the specific configuration of an interferometer included in the distance measuring device 100 according to the present embodiment.

To be specific, as illustrated in Fig. 3, the distance measuring device 100 includes single-wavelength laser light sources 110 and 112, a wavelength combiner 114, optical fibers 116 and 122, a frequency-stabilized laser light source 120, interference systems 130 and 140, photodetectors 150 and 152, a signal receiver 160, a memory 162, and a processing circuit 164. The interference system 130 is fixed to the head 104. The interference system 140 is fixed to a member different from the head 104. The interference system 130 and the photodetector 150 constitute a first interferometer. The interference system 140 and the photodetector 152 constitute a second interferometer.

The first interferometer and the second interferometer are included in at least one interferometer included in the distance measuring device 100. At least one interferometer uses homodyne interference. In the present embodiment, each of the first interferometer and the second interferometer uses homodyne interference.

The first interferometer outputs a first signal by using interference based on a plurality of laser beams whose wavelengths differ from each other and that include the first laser beam. The first interferometer is an interferometer that uses MWI. The first signal is generated by MWI of a plurality of laser beams.

The second interferometer is an interferometer that uses SWI. The second interferometer outputs a second signal by using interference based on the second laser beam. The second signal is generated by SWI of the second laser beam.

The single-wavelength laser light source 110 is an example of a first light source that emits a first laser beam. The single-wavelength laser light source 112 is an example of a third light source that emits a third laser beam whose wavelength is different from that of the first laser beam. Each of the first laser beam and the third laser beam is a single-wavelength laser beam. Let λ₁ denote the wavelength of the first laser beam, and let λ₂ denote the wavelength of the third laser beam. The wavelength λ₁ and λ₂ are, for example, 1550 nm and 1551 nm, but are not limited to these. The wavelength λ₁ and λ₂ are included in the near-infrared light band. However, depending on the type of the object 102, the wavelength λ₁ and λ₂ may be included in the visible light band or the ultraviolet light band.

The single-wavelength laser light sources 110 and 112 are each, for example, a DFB laser light source, but are not limited to this. At least one of the single-wavelength laser light sources 110 and 112 may be a semiconductor laser light source different from a DFB laser light source, or may be a device in which the absorption line of a gas cell as a reference frequency and a semiconductor laser light source are combined. At least one of the single-wavelength laser light sources 110 and 112 may be a He-Ne laser light source, depending on the type of the object 102.

The wavelength combiner 114 combines the first laser beam and the third laser beam. The wavelength combiner 114 is, for example, a dense wavelength division multiplexing (DWDM) element, a holographic optical element, or the like.

The wavelength combiner 114 is connected to each of the single-wavelength laser light sources 110 and 112 through an optical fiber. The first laser beam emitted from the single-wavelength laser light source 110 and having the wavelength λ₁ is transmitted through the optical fiber and enters the wavelength combiner 114. The third laser beam emitted from the single-wavelength laser light source 112 and having the wavelength λ₂ is transmitted through the optical fiber and enters the wavelength combiner 114. The wavelength combiner 114 combines the first laser beam and the third laser beam and outputs the combined laser beam to the interference system 130.

The optical fiber 116 is a first optical fiber and guides the first laser beam and the third laser beam to the interference system 130. To be specific, the optical fiber 116 allows the first laser beam and the third laser beam, which have been combined by the wavelength combiner 114, to enter a beam splitter 132 of the interference system 130.

In the present embodiment, each of the single-wavelength laser light sources 110 and 112 and the wavelength combiner 114 is fixed to a member (not shown) different from the head 104. That is, none of the single-wavelength laser light sources 110 and 112 and the wavelength combiner 114 is fixed to the head 104. Thus, it is possible to reduce the weight and size of the head 104. For example, an end portion of the optical fiber 116 on the light emission side is fixed to the head 104. Because the end portion of the optical fiber 116 on the light emission side is fixed to the head 104, it is possible to reduce displacement of the light path.

The frequency-stabilized laser light source 120 is an example of a second light source that emits a second laser beam. Let λ₀ be the wavelength of the second laser beam. For example, the wavelength λ₀ of the second laser beam is different from the wavelength λ₁ of the first laser beam. In the present embodiment, the wavelength λ₀ of the second laser beam is shorter than the wavelength λ₁ of the first laser beam.

The frequency of the second laser beam is more stable than the frequency of the first laser beam. That is, the frequency-stabilized laser light source 120 is a light source whose frequency stability is higher than that of the single-wavelength laser light source 110. For example, the frequency-stabilized laser light source 120 is a He-Ne laser light source or a frequency-locked laser light source having a gas cell.

In the present embodiment, the frequency-stabilized laser light source 120 is fixed to a member (not shown) different from the head 104. That is, the frequency-stabilized laser light source 120 is not fixed to the head 104. Thus, it is possible to reduce the weight and size of the head 104.

The optical fiber 122 is a second optical fiber and guides the second laser beam to the interference system 140. To be specific, the optical fiber 122 allows the second laser beam from the frequency-stabilized laser light source 120 to enter a beam splitter 142 of the interference system 140.

The interference system 130 is an example of a first interference system for causing interference based on a plurality of laser beams whose wavelengths differ from each other. To be specific, the interference system 130 causes interference based on the first laser beam and the third laser beam. The interference system 130 is an optical system that uses Michelson interference. The interference system 130 is fixed to the head 104. As illustrated in Fig. 3, the interference system 130 includes the beam splitter 132 and a reference surface 108.

The beam splitter 132 is an optical element that splits incident light into a plurality of light beams with an intensity ratio and emits the plurality of light beams in different directions. The beam splitter 132 is, for example, a half mirror, and splits incident light into transmitted light and reflected light so as to have the same intensity. However, the intensity ratio between transmitted light and reflected light need not be 1:1. The beam splitter 132 corresponds to the beam splitter 192 of Fig. 2B.

The reference surface 108 is an example of a reflector included in the head 104. In the present embodiment, as illustrated in Fig. 4, the reference surface 108 includes a reference surface 108a and a reference surface 108b. Each of the beam splitter 132, the reference surface 108a, the reference surface 108b, and the photodetector 150 is fixed to the head 104, and the relative positional relationship among these is fixed. The photodetector 150 may be fixed to a member different from the head 104.

The reference surface 108a corresponds to the mirror 194 of Fig. 2B. Compared with the interference system of MWI illustrated in Fig. 2B, in the interference system 130 illustrated in Fig. 4, the positional relationship between the reference surface 108a corresponding to the mirror 194 and the object 102 corresponding to the object 170a is the opposite. However, either of these configurations is allowed.

In the interference system 130 illustrated in Fig. 4, each of the laser beams respectively having the wavelengths λ₁ and λ₂ is split (to be specific, split with an intensity ratio) into two light beams by the beam splitter 132. One of the two light beams is reflected by the reference surface 108a, then reenters the beam splitter 132, and a part of the light beam is reflected by the beam splitter 132 and travels toward the photodetector 150 as reference light. The reference light includes light components having the wavelengths λ₁ and λ₂. A condenser lens 134 causes the other of the two light beams to be incident on a predetermined position on a surface of the object 102. The other of the two light beams is reflected at the predetermined position on the object 102, then reenters the beam splitter 132, and a part of the light beam passes through the beam splitter 132 and travels toward the photodetector 150 as measurement light.

Because the interference system 130 includes the condenser lens 134, it is possible to increase resolution in the lateral direction and to increase the allowable angle of a sample surface that is measurable. On the other hand, in the height direction, a distance over which light returns is limited in the range of Rayleigh length. Therefore, the distance between the object 102 and the head 104 is maintained basically at the same distance by moving the head 104 in accordance with the surface shape of a measurement object. If the surface shape of the object 102 changes discontinuously, the movement speed of the head 104 is insufficient. However, this problem is solved because the length measurement range is increased by using MWI.

The photodetector 150 outputs a first signal that is generated by interference between measurement light and reference light. To be specific, the photodetector 150 detects interference light that is generated by homodyne interference between measurement light having the wavelength λ₁ and reference light having the wavelength λ₁, and outputs, as a first signal, a signal corresponding to the intensity of the interference light. Moreover, the photodetector 150 detects interference light that is generated by homodyne interference between measurement light having the wavelength λ₂ and reference light having the wavelength λ₂, and outputs a signal corresponding to the intensity of the interference light as a first signal. The photodetector 150 may include a DWDM and detectors corresponding to the number of wavelengths and detect a plurality of homodyne interferences. However, this is not particularly limited. For example, the photodetector 150 corresponds to a configuration illustrated in Fig. 2B, which includes the photodetectors 196 and 197, the wavelength separating element 198, and the mirror 199.

The interference system 140 is an example of a second interference system for causing interference based on a second laser beam. To be specific, the interference system 140 causes interference based on the second laser beam emitted from the frequency-stabilized laser light source 120. The interference system 140 is an optical system that uses Michelson interference. The interference system 140 is fixed to a member different from the head 104. As illustrated in Fig. 3, the interference system 140 includes the beam splitter 142 and the reference surface 106.

The beam splitter 142 is an optical element that splits incident light into a plurality of light beams with an intensity ratio and emits the plurality of light beams in different directions. The beam splitter 142 is, for example, a half mirror, and splits incident light into transmitted light and reflected light so as to have the same intensity. However, the intensity ratio between transmitted light and reflected light need not be 1:1. The beam splitter 142 corresponds to the beam splitter 182 of Fig. 2A.

The reference surface 106 is fixed to a member different from the head 104. The reference surface 106 corresponds to the mirror 184 of Fig. 2A. Compared with the interference system of SWI illustrated in Fig. 2A, in the interference system 140 illustrated in Fig. 4, the reference surface 108b of the head 104 is disposed as the object 170a. That is, the interference system 140 is an interference system for measuring the distance from the reference surface 106 to the reference surface 108b as the distance d2 from the reference surface 106 to the head 104. As illustrated in Fig. 4, a mirror 144 for adjusting the optical path from the beam splitter 142 to the reference surface 108b is provided. However, the mirror 144 may be omitted.

In the interference system 140 illustrated in Fig. 4, a laser beam having the wavelength λ₀ is split (to be specific, split with an intensity ratio) into two light beams by the beam splitter 142. One of the two light beams is reflected by the reference surface 106, then reenters the beam splitter 142, and a part of the light beam is reflected by the beam splitter 142 and travels toward the photodetector 152 as reference light. The other of the two light beams is incident on the reference surface 108b via the mirror 144, is reflected by the reference surface 108b, then reenters the beam splitter 142, and a part of the light beam is reflected by the beam splitter 142 and travels toward the photodetector 152 as measurement light.

The photodetector 152 outputs a second signal that is generated by interference between measurement light and reference light. To be specific, the photodetector 152 detects interference light that is generated by homodyne interference between measurement light having the wavelength λ₀ and reference light having the wavelength λ₀, and outputs a signal corresponding to the intensity of the interference light as a second signal. For example, the photodetector 152 corresponds to the photodetector 186 illustrated in Fig. 2A.

The interference system 140 for SWI and the photodetector 152 are fixed to a member different from the head 104 and measure the distance d2 from the reference surface 106 to the reference surface 108b included in the head 104. As the surface area of the object 102 increases, the movement distance of the head 104 increases, and thus the length measurement range widens although the distance d2 changes continuously. By using a frequency-stabilized laser whose frequency stability is very high, such as a He-Ne laser light source, as the frequency-stabilized laser light source 120, it is possible to measure a long length measurement range with high accuracy.

The signal receiver 160 acquires the first signal output from the photodetector 150 and acquires the second signal output from the photodetector 152. The signal receiver 160 stores the acquired first signal and second signal in the memory 162.

The memory 162 is a storage device such as a non-volatile memory and/or a volatile memory. The memory 162 stores the first signal and the second signal. The memory 162 may store programs and data for operating the elements of the distance measuring device 100 and distance information and the like obtained by signal processing.

The processing circuit 164 is a signal processing circuit that processes signals output from interferometers. To be specific, the processing circuit 164 calculates the distance d1 from the head 104 to the object 102 based on the first signal output from the photodetector 150. Moreover, the processing circuit 164 calculates the distance d2 from the reference surface 106 to the head 104 based on the second signal output from the photodetector 152.

For example, the processing circuit 164 obtains the position of the object 102 as phase information by processing the first signal, output from the photodetector 150, based on a predetermined algorithm. As a typical phase estimation algorithm, it is possible to use a 4-step phase-shifting algorithm or the like. The processing circuit 164 can calculate the distance d1 from the head 104 to the object 102 based on the phase information. Likewise, the processing circuit 164 can calculate the distance d2 from the reference surface 106 to the head 104 based on the second signal output from the photodetector 152. To be specific, based on the second signal, the processing circuit 164 calculates the distance from the reference surface 106 to the reference surface 108b included in the head 104 as the distance d2.

Moreover, the processing circuit 164 calculates the distance from the reference surface 106 to the object 102 based on the distance d1 and the distance d2. Each of the reference surface 106 and the object 102 is fixed during measurement and does not move. By scanning the measurement position on the surface of the object 102, the processing circuit 164 can obtain the surface shape of the object 102 based on the distance from the reference surface 106 to the object 102.

The processing circuit 164 is implemented in an integrated circuit such as a large scale integration (LSI). For example, the processing circuit 164 may be implemented in a dedicated hardware configuration and may measure the distance from the reference surface 106 to the object 102. Alternatively, the processing circuit 164 may include a processor and may calculate the distance from the reference surface 106 to the object 102 by causing the processor to execute a program stored in the memory 162. Alternatively, the processing circuit 164 may be a field programmable gate array (FPGA), or a reconfigurable processor that allows reconfiguration of connections and settings of circuit cells in an LSI.

In the present embodiment, the timings at which the first signal and the second signal are output are synchronized. If the timings of measurement using MWI and measurement using SWI are different, a problem arises in that error in distance measurement increases and the accuracy decreases. Therefore, the timing of measurement using MWI and the timing of measurement using SWI are synchronized. At this time, the sampling rate may differ between SWI and MWI due to difference in measurement principle. The distance measuring device 100 according to the present embodiment has the function of enabling sampling synchronization. For example, the signals may be collected by using the same FPGA, or, if different FPGAs are used for MWI and SWI, a configuration for synchronizing the FPGAs may be provided.

### [4. Operation]

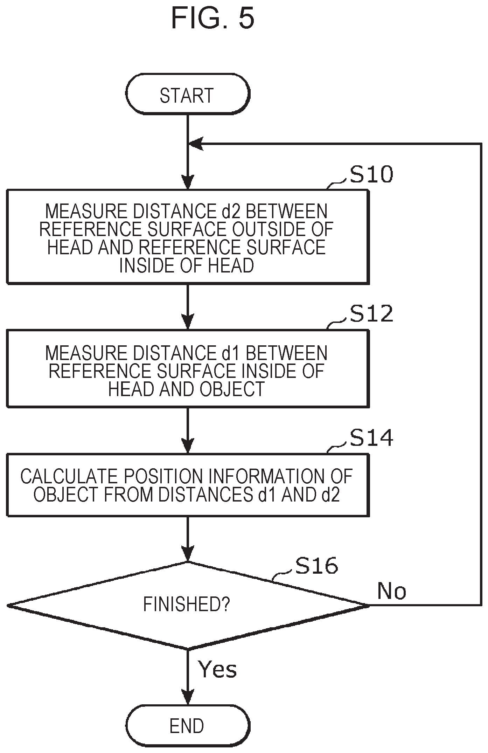

Next, referring to Fig. 5, the operation of the distance measuring device 100 according to the present embodiment will be described. Fig. 5 is a flowchart illustrating the operation of the distance measuring device 100 according to the present embodiment. Fig. 5 mainly illustrates the operation of the processing circuit 164.

As illustrated in Fig. 5, first, the distance d2 between the reference surface 106 outside of the head 104 and the reference surface 108b inside of the head 104 is measured (S10). To be specific, the frequency-stabilized laser light source 120 emits the second laser beam having the wavelength λ₀ and causes the second laser beam to enter the interference system 140. The interference system 140 causes homodyne interference between reflected light reflected by the reference surface 106 (that is, reference light having the wavelength λ₀) and reflected light reflected by the reference surface 108b (that is, measurement light having the wavelength λ₀). The photodetector 152 outputs the second signal due to homodyne interference in the interference system 140. The processing circuit 164 calculates the distance d2 based on the second signal obtained via the signal receiver 160.

Next, the distance d1 between the reference surface 108a inside of the head 104 and the object 102 is measured (S12). To be specific, the single-wavelength laser light sources 110 and 112 respectively emit the first laser beam having the wavelength λ₁ and the third laser beam having the wavelength λ₂ and cause the laser beams to enter the interference system 130. The interference system 130 causes homodyne interference between reflected light reflected by the reference surface 108a (that is, reference light having the wavelength λ₁ and reference light having the wavelength λ₂) and reflected light reflected by the object 102 (that is, measurement light having the wavelength λ₁ and measurement light having the wavelength λ₂). The photodetector 150 outputs the first signal due to homodyne interference in the interference system 130. The processing circuit 164 calculates the distance d1 based on the first signal obtained via the signal receiver 160.

Calculation of the distance d1 may be performed before calculation of the distance d2, or these calculations may be performed simultaneously. At this time, the timing of outputting the first signal and the timing of outputting the second signal are synchronized.

Next, the processing circuit 164 calculates the position information about the object 102 from the distances d1 and d2 (S14). To be specific, the processing circuit 164 calculates the distance from the reference surface 106 to a measurement position on the object 102.

Thereafter, measurement of the distances d1 and d2 and calculation of the position information are repeatedly performed until measurement of the object 102 is finished (No in S16).

### (Second Embodiment)

Next, a second embodiment will be described.

The second embodiment differs from the first embodiment mainly in that a frequency-stabilized laser light source is used for both of SWI and MWI. Hereafter, the difference from the first embodiment will be mainly described, and description of common points will be omitted or simplified.

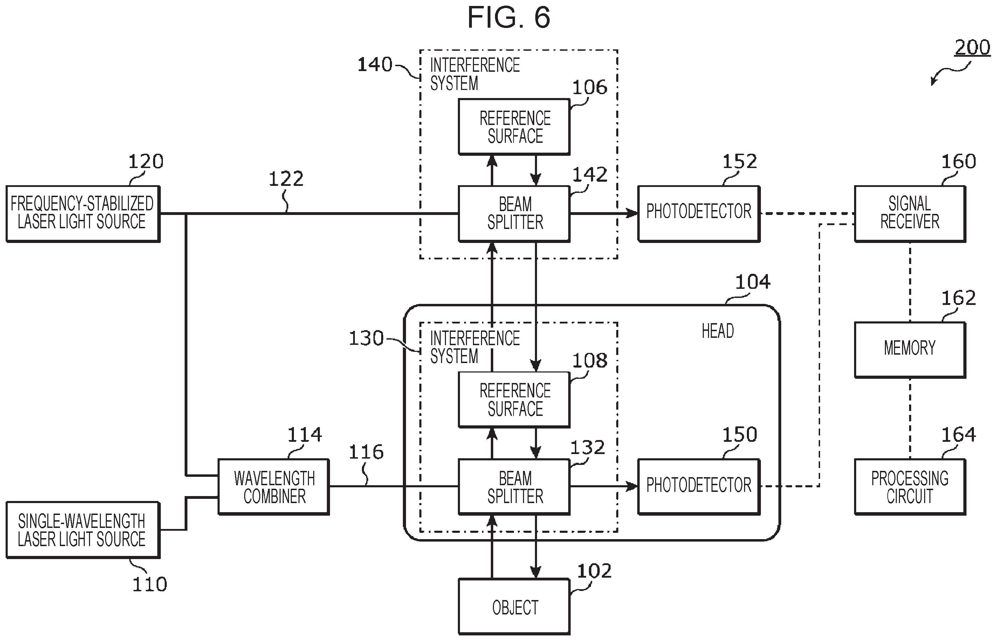

Fig. 6 is a block diagram illustrating the configuration of a distance measuring device 200 according to the present embodiment. The distance measuring device 200 illustrated in Fig. 6 differs from the distance measuring device 100 according to the first embodiment in that the single-wavelength laser light source 112 is omitted and the second laser beam emitted by the frequency-stabilized laser light source 120 is used for MWI.

The frequency-stabilized laser light source 120 and the wavelength combiner 114 are connected through an optical fiber. The second laser beam emitted from the frequency-stabilized laser light source 120 is split into two light beams that enter the wavelength combiner 114 and the interference system 140. Each of the two split light beams is the second laser beam having the wavelength λ₀. The wavelength combiner 114 combines the second laser beam having the wavelength λ₀ and the first laser beam having the wavelength λ₁ and emitted from the single-wavelength laser light source 110, and outputs the combined laser beam to the interference system 130.

The operation of the interference system 130 and the photodetector 150 is the same as that in the first embodiment. The difference is that homodyne interference of the second laser beam, instead of the third laser beam, is used. That is, in the present embodiment, the first interferometer, which is constituted by the interference system 130 and the photodetector 150, outputs the first signal by using interference based on the first laser beam and the second laser beam.

With the distance measuring device 200 according to the present embodiment, it is possible to use the second laser beam for both of MWI and SWI. Therefore, it is possible to reduce the number of light sources included in the distance measuring device 200, and it is possible to realize reduction in the size and weight of the distance measuring device 200.

### (First Modification of Embodiment)

Next, a first modification of the embodiment will be described.

The first modification differs from the first or second embodiment in that a plurality of reference surfaces are provided outside of a head and the distance from each of the plurality of reference surfaces to the head is measured. Hereafter, the difference from the first or second embodiment will be mainly described, and description of common points will be omitted or simplified.

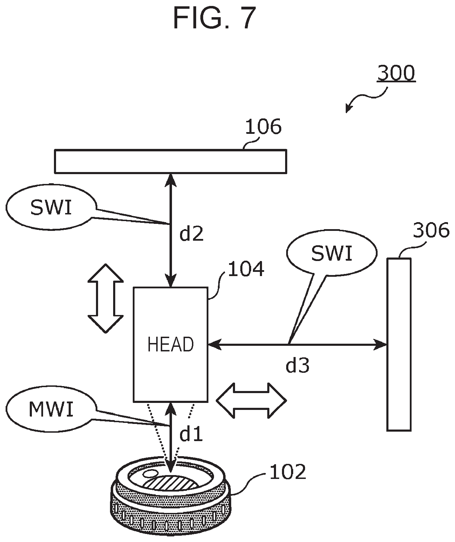

Fig. 7 schematically illustrates a distance measuring device 300 according to the present modification. As illustrated in Fig. 7, the distance measuring device 300 differs from the distance measuring device 100 according to the first embodiment in that the distance measuring device 300 further includes a reference surface 306.

The reference surface 306 is disposed at a position different from the position of the reference surface 106. To be specific, the reference surface 306 is disposed at a position perpendicular to the reference surface 106.

The distance measuring device 300 measures the distance d3 from the reference surface 306 to the head 104 in the same way as measuring the distance d2 from the reference surface 106 to the head 104. To be specific, the distance measuring device 300 further includes a third interferometer that is constituted by the interference system 140 and the photodetector 152 and that has a configuration similar to that of the second interferometer. In the first modification of the embodiment, as indicated by hollow arrows in Fig. 7, the head 104 is movable in the direction in which the distance d2 is measured and in the direction in which the distance d3 is measured.

The second laser beam emitted from the frequency-stabilized laser light source 120 is split into two split laser beams that respectively enter the second interferometer and the third interferometer. The second interferometer outputs a second signal by using interference of one of the two split laser beams. The third interferometer outputs a third signal by using interference of the other of the two split laser beams. To be specific, the third interferometer outputs the third signal by using SWI.

The processing circuit 164 measures the two-dimensional position of the head 104 based on the second signal and the third signal. To be specific, the processing circuit 164 calculates the distance d2 based on the second signal and calculates the distance d3 based on the third signal.

A plurality of reference surfaces 306 may be provided. For example, two reference surfaces 306 may be provided so as to be perpendicular to each other and perpendicular to the reference surface 106. Thus, the processing circuit 164 can measure the three-dimensional position of the head 104.

The second laser beam emitted from the frequency-stabilized laser light source 120 is used to measure the distances d2 and d3. However, this is not a limitation. The distance measuring device 300 may include a dedicated light source that is used only to measure the distance d3.

### (Second Modification of Embodiment)

Next, a second modification of the embodiment will be described.

The second modification differs from the first or second embodiment in that a movable stage is provided between a head and a reference surface and the distance from the reference surface to the movable stage and the distance from the movable stage to the head are measured. Hereafter, the difference from the first or second embodiment will be mainly described, and description of common points will be omitted or simplified.

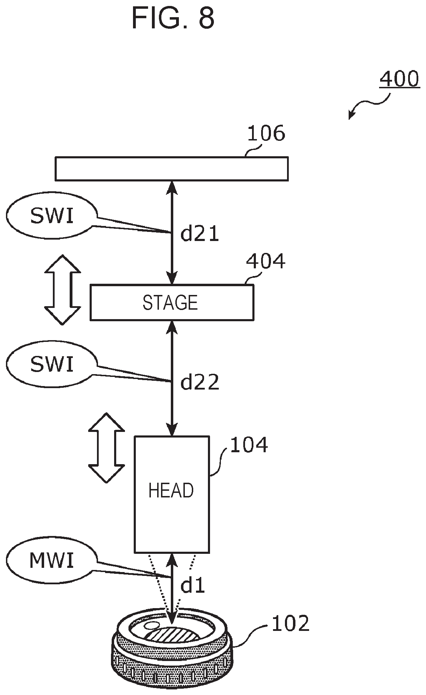

Fig. 8 schematically illustrates a distance measuring device 400 according to the present modification. As illustrated in Fig. 8, the distance measuring device 400 differs from the distance measuring device 100 according to the first embodiment in that the distance measuring device 400 further includes a movable stage 404.

The stage 404 is disposed between the reference surface 106 and the head 104. As indicated by a hollow arrow in Fig. 8, the stage 404 is movable in a direction parallel to the movement direction of the head 104. The distance measuring device 400 measures the distance d1 from the head 104 to the object 102, the distance d21 from the reference surface 106 to the stage 404, and the distance d22 from the stage 404 to the head 104. That is, the distance measuring device 400 measures a second distance from the reference surface 106 to the head 104 by dividing the second distance into a distance d21 and a distance d22.

Measurement of the distances d21 and d22 is similar to that performed by the distance measuring device 300 according to the first modification. To be specific, the distance measuring device 400 further includes a third interferometer that is constituted by the interference system 140 and the photodetector 152 and that has a configuration similar to that of the second interferometer. The second interferometer measures the distance d21, and the third interferometer measures the distance d22. One of the distances d21 and d22 may be measured by using MWI.

With the present modification, because the movable stage 404 is included, it is possible to reduce the movement amount of the movable head 104. By reducing the movement amount of the head 104 including the interference system 130, it is possible to suppress decrease of measurement accuracy due to the movement. Even if the movable range of the head 104 is narrow or the accuracy of movement of the head 104 is low, it is possible to perform measurement with high accuracy by moving the movable stage 404.

### (Third Modification of Embodiment)

Next, a third modification of the embodiment will be described.

The third modification differs from the first or second embodiment in that the third modification includes a movable stage that supports an object. Hereafter, the difference from the first or second embodiment will be mainly described, and description of common points will be omitted or simplified.

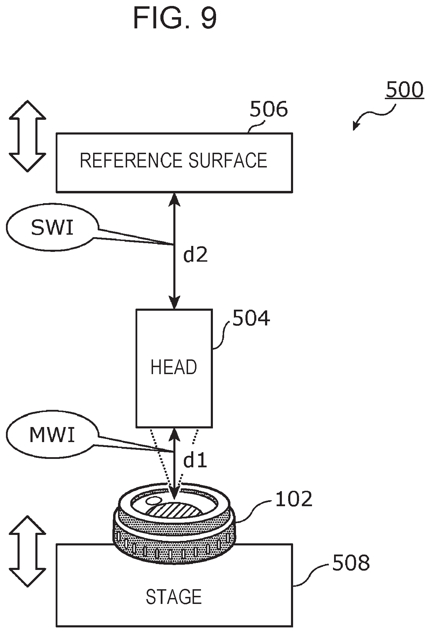

Fig. 9 schematically illustrates a distance measuring device 500 according to the present modification. As illustrated in Fig. 9, the distance measuring device 500 includes a head 504, a movable reference surface 506, and a movable stage 508. The distance measuring device 500 according to the present modification differs from the distance measuring device 100 according to the first embodiment in that the stage 508 that supports the object 102 and the reference surface 506 moves while the head 504 is fixed and does not move.

The relative positional relationship between the stage 508 and the reference surface 506 is fixed. That is, the distance from the reference surface 506 to the stage 508 is maintained to be constant. Thus, by measuring the distance from the reference surface 506 to the object 102 supported by the stage 508, it is possible to measure the surface shape of the object 102 in the same way as in the first embodiment. The positional relationship between the stage 508 and the reference surface 506 need not be fixed.

### (Other Embodiments)

Heretofore, distance measuring devices according to one or more aspects have been described based on embodiments. However, the present disclosure is not limited to these embodiments. Within the gist of the present disclosure, modifications of the embodiments that a person having ordinary skill in the art can conceive and embodiments that are constructed by combining elements of different embodiments are also included in the scope of the present disclosure.

For example, in the embodiments and the modifications described above, examples in which the processing circuit 164 calculates the distance from the reference surface 106 to the object 102 have been described. However, this is not a limitation. The processing circuit 164 may calculate the distances d1 and d2 and then output these to another device. For example, the processing circuit 164 may transmit the distances d1 and d2 to another computer and cause the other computer to calculate the distance from the reference surface 106 to the object 102. Alternatively, the processing circuit 164 may transmit the distances d1 and d2 to a display and cause the display to display the distances, or may output the distances to a printer and cause the printer to print the distances on a medium such as paper. Thus, because it is possible to present the distance d1 and d2 to a user or the like, it is possible for the user to calculate the distance from the reference surface 106 to the object 102 by hand calculation. In this way, the processing circuit 164 need not calculate the distance from the reference surface 106 to the object 102.

For example, at least one of the interference systems 130 and 140 may be an optical system that uses Fizeau interference, Mach-Zehnder interference, or the like.

The distance measuring device need not include one of the single-wavelength laser light sources 110 and 112. For example, the distance measuring device includes, instead of the single-wavelength laser light source 110, a beam splitter that is disposed between the single-wavelength laser light source 112 and the wavelength combiner 114 and a frequency shifter that shifts the frequency of an incident laser beam. The beam splitter splits (splits with an intensity ratio) a laser beam emitted from the single-wavelength laser light source 112 into two light beams, causes one of the two light beams to enter the wavelength combiner 114, and causes the other of the two light beams to enter the wavelength combiner 114 via the frequency shifter. Thus, it is possible to cause the wavelength combiner 114 to combine a plurality of laser beams having different frequencies (and wavelengths) and to output the combined laser beam. As the frequency shifter, it is possible to use, for example, an acousto-optic modulator (AOM).

The distance measuring device may include, instead of the single-wavelength laser light sources 110 and 112, a light source that emits a laser beam including a plurality of single modes. For example, the laser beam including a plurality of single modes may be, for example, an optical frequency comb laser beam. An optical frequency comb laser beam is a laser beam whose spectrum includes discrete and equally-spaced frequency lines.

General or specific embodiments of the present disclosure may be implemented in a system, a device, a method, an integrated circuit, or a computer program. Alternatively, general or specific embodiments may be implemented in a non-transitory computer-readable storage medium, such as a CD-ROM, an HDD, or a semiconductor memory storing the computer program. General or specific embodiments may be implemented in any selective combination of a system, a device, a computer program, and a storage medium.

Various modifications, replacements, additions, omissions, and the like can be made on each of the embodiments described above within the scope of the claims and the equivalents thereof.

### Industrial Applicability

The present disclosure can be used for a distance measuring device that can measure a distance with high accuracy and can be used, for example, for a surface-shape inspection device and the like.

### Reference Signs List

100, 200, 300, 400, 500 distance measuring device
102, 170a, 170b, 170c object
104, 504 head
106, 108, 108a, 108b, 306, 506 reference surface
110, 112 single-wavelength laser light source
114 wavelength combiner
116, 122 optical fiber
120 frequency-stabilized laser light source
130, 140 interference system
132, 142, 182, 192 beam splitter
134 condenser lens
144, 184, 194, 199 mirror
150, 152, 186, 196, 197 photodetector
160 signal receiver
162 memory
164 processing circuit
198 wavelength separating element
404, 508 stage

## Claims

1. A distance measuring device comprising:
a first light source that emits a first laser beam;
a second light source that emits a second laser beam;
at least one interferometer that outputs a first signal by using first interference based on a plurality of laser beams that include the first laser beam, the plurality of laser beams being different in wavelength from each other, the at least one interferometer outputting a second signal by using second interference based on the second laser beam, the at least one interferometer including a reference surface;
a head wherein a distance from the head to an object is variable; and
a processing circuit that calculates a first distance from the head to the object based on the first signal and calculates a second distance from the reference surface to the head based on the second signal.

2. The distance measuring device according to claim 1,
wherein a frequency of the second laser beam is more stable than a frequency of the first laser beam.

3. The distance measuring device according to claim 1,
wherein the second light source is fixed to a member different from the head.

4. The distance measuring device according to claim 1,
wherein the second light source is a He-Ne laser light source or a frequency-locked laser light source having a gas cell.

5. The distance measuring device according to claim 1,
wherein the first light source is a distributed-feedback laser light source.

6. The distance measuring device according to claim 1, further comprising:
an optical fiber that guides the first laser beam or the second laser beam to the at least one interferometer.

7. The distance measuring device according to claim 1,
wherein the at least one interferometer is configured to use homodyne interference.

8. The distance measuring device according to claim 1,
wherein the first signal is generated by multi-wavelength interference between the plurality of laser beams.

9. The distance measuring device according to claim 1, wherein
the at least one interferometer includes
a first interference system for causing the first interference, and
a second interference system for causing the second interference,
the first interference system is fixed to the head, and
the second interference system is fixed to a member different from the head.

10. The distance measuring device according to claim 1,
wherein the processing circuit calculates a distance from the reference surface to the object based on the first distance and the second distance.

11. The distance measuring device according to claim 1,
wherein a timing of outputting the first signal and a timing of outputting the second signal are synchronized.

12. The distance measuring device according to claim 1, wherein
the head includes a reflector, and
the processing circuit calculates a distance from the reference surface to the reflector as the second distance based on the second signal.

13. The distance measuring device according to claim 1,
wherein a wavelength of the second laser beam is shorter than a wavelength of the first laser beam.

14. The distance measuring device according to claim 1, wherein
the at least one interferometer includes
a first interference system for causing the first interference, and
a second interference system for causing the second interference, and
the distance measuring device further comprises
a first optical fiber that guides the first laser beam to the first interference system, and
a second optical fiber that guides the second laser beam to the second interference system.

15. The distance measuring device according to claim 1, wherein
the at least one interferometer outputs at least one third signal by using third interference based on at least one of a plurality of split laser beams that are generated by splitting the second laser beam, and
the processing circuit measures a two-dimensional position or a three-dimensional position of the head based on the second signal and the at least one third signal.

16. The distance measuring device according to any one of claims 1 to 15, further comprising:
a third light source that emits a third laser beam having a wavelength different from a wavelength of the first laser beam, wherein
the plurality of laser beams further include the third laser beam, and
the at least one interferometer outputs the first signal by using the first interference based on the first laser beam and the third laser beam.

17. The distance measuring device according to any one of claims 1 to 15, wherein
the plurality of laser beams further include the second laser beam, and
the at least one interferometer outputs the first signal by using the first interference based on the first laser beam and the second laser beam.

18. The distance measuring device according to any one of claims 1 to 15,
wherein the head is movable.

19. The distance measuring device according to any one of claims 1 to 15, further comprising:
a movable stage for supporting the object.
